# EUROPÄISCHE PATENTSCHRIFT

(11) **EP 1 416 012 B1**
(45) Veröffentlichungstag und Bekanntmachung des Hinweises auf die Patenterteilung: **16.01.2008**
(21) Anmeldenummer: 03024567.4
(22) Anmeldetag: 28.10.2003
(51) Int. Cl.: C08L 1/06, A22C 13/00, B65D 65/42, C08J 5/00

(54) **Cellulosehydrathaltige Nahrungsmittelhülle mit Vinylpyrrolidon-Polymeren**
Cellulose-hydrate-containing food casing with vinylpyrrolidone polymers
Enveloppe pour aliments contenant un hydrate de cellulose et des polymères de vinylpyrrolidone

(30) Priorität: 04.11.2002 DE 10251200
(43) Veröffentlichungstag der Anmeldung: 06.05.2004
(73) Patentinhaber: Kalle GmbH, 65203 Wiesbaden (DE)
(72) Erfinder: Hammer, Klaus-Dieter, Dr., 55120 Mainz (DE); Gord, Herbert, Dipl.-Ing., 55218 Ingelheim (DE); Neeff, Rainer, Dr., 65203 Wiesbaden (DE)
(74) Vertreter: Plate, Jürgen

(56) Entgegenhaltungen:
- EP-A- 0 635 212
- DE-A- 3 409 746
- DE-A- 19 510 883
- US-A- 4 396 039
- US-A- 5 662 971

## Beschreibung

Die Erfindung betrifft eine Cellulosehydrat enthaltende, nahtlose, schlauchförmige Nahrungsmittelhülle sowie ein Verfahren zu deren Herstellung.

Die Herstellung von Kunstdärmen aus Cellulosehydrat ist seit langem bekannt. Sie erfolgt bis heute überwiegend nach dem Viskoseverfahren. Cellulose in Form von Zellstoff wird dabei mit Natronlauge mercerisiert. Anschließend wird die so erhaltene Alkali-Cellulose mit Schwefelkohlenstoff (CS₂) zu Cellulosexanthogenat umgesetzt. Das Produkt wird allgemein als Viskose bezeichnet. Nach einer mehrtägigen Reifung wird die Viskose unter Druck durch eine Ringdüse in ein Fällbad gedrückt. In dem Fällbad wird die Viskose in Cellulosehydrat übergeführt. Der Cellulosehydrat-Gelschlauch durchläuft dann noch weitere Fäll- bzw. Waschbäder und wird schließlich in der üblichen Weise gewaschen, getrocknet und meist auch mit einem sekundären Weichmacher, wie Glycerin, versehen.

Bekannt ist weiterhin der Zusatz verschiedener Additive zur Viskose, die die Eigenschaften der Cellulosehydrat-Hüllen modifizieren. Dazu gehören wäßrige Dispersionen von (C₁₀-C₂₅)Alkyl-trimethylol-harnstoff, von (C₁₀- C₂₅)Alkylamin-bisdimethylen-triazinon-tetramethylol (DE 23 62 770) oder von (C₁₂-C₂₀)Alkyl-ethylenharnstoff (DE 23 62 606). Als primäre (= permanent wirkende, nicht auswaschbare) Weichmacher können auch Ester von aliphatischen (C₁₀-C₂₄)Monocarbonsäuren mit Diolen (wie Polyethylenglykol) oder mit Polyolen (wie Glycerin) der Viskose zugemischt werden (DE 26 54 427).

Durch Zumischen von Alginsäure und/oder Alginat zur Viskose lassen sich Cellulosehüllen mit einer erhöhten Hydrophilie erhalten (DE 40 02 083). Daneben werden als Additive Copolymere mit Einheiten aus Vinylpyrrolidon und Einheiten aus (Meth)acrylaten, die tertiäre Ammoniumgruppen aufweisen, verwendet. Solche Copolymere sind beispielsweise unter der Bezeichnung ®Gafquat von der GAF Corp. erhältlich. Die Copolymere bewirken eine Verminderung der Permeation, was insbesondere zu einer Verbesserung der Dauerwurstreifung führt (EP-A 635 212). Werden neben Alginsäure und/oder Alginat auch noch Fette, fett-ähnliche Verbindungen oder Öle zugesetzt, so erhält man Hüllen, die nicht mehr mit einem sekundären (= vorübergehend wirkenden, auswaschbaren) Weichmacher, wie Glycerin, behandelt werden müssen (EP-A 638 241). Wieder andere Additive haben eine Erhöhung der Zähigkeit der trockenen Cellulose zum Ziel.

Bei all diesen Maßnahmen ging es darum, die Eigenschaften des Cellulosehydrats zu verbessern, um die daraus hergestellten Hüllen den in der Praxis auftretenden Anforderungen besser anzupassen. Das Cellulosehydrat ist in den bekannten Hüllen stets in Menge und Eigenschaften dominant geblieben, d. h. auch die negativen Celluloseeigenschaften, wie die Anfälligkeit für den enzymatischen Abbau durch Cellulasen, ein zu starker Schrumpf, Verdichtung und Versprödung des Cellulosehydrats, wurden nicht ausreichend kompensiert.

Daneben hat es Bestrebungen gegeben, das Herstellungsverfahren für faserverstärkte Cellulosehüllen durch Erhöhen der Spinngeschwindigkeit rationeller und umweltfreundlicher zu gestalten. Gemäß der DE 195 10 883 wurde das durch Vermindern der pro Flächeneinheit aufgetragenen Viskosemenge erreicht. Wird die Viskosemenge jedoch um mehr als 20 bis 25% vermindert, verschlechtert sich der Spinnverlauf und die Ausbeute geht zurück. Darüber hinaus zeigen die zum Verschließen der Wurstenden verwendeten Clips keinen festen Sitz mehr. Zudem sind die Hüllen dann scheranfällig. Mit der Verminderung von Gewicht und Dicke nimmt außerdem die Permeation zu, wodurch sich die Eignung der Hüllen für Dauerwurst, insbesondere für schimmelgereifte Dauerwurst, verschlechtert.

Aus diesen Mängeln ergibt sich nun die Aufgabe, Cellulosehüllen möglichst rationell und umweltfreundlich herzustellen, dabei die Viskosemenge möglichst gering zu halten (was insbesondere die Gasbildung im Innern der Schläuche bei der Regeneration der Cellulose niedrig hält). Die Hüllen sollen eine so geringe Permeation aufweisen, daß sie auch für luftgereifte Dauerwurst geeignet sind.

Gelöst wurde die Aufgabe dadurch, daß die Viskose mit bestimmten Vinylpyrrolidon-Copolymeren (nachfolgend als PVP bezeichnet) vermischt wird. Auf diese Weise gelingt es, die negativen Celluloseeigenschaften völlig zu kompensieren und gleichzeitig den Spinnprozeß zu verbessern.

Gegenstand der Erfindung ist demgemäß eine Cellulosehydrat enthaltende, nahtlose, schlauchförmige Nahrungsmittelhülle, die dadurch gekennzeichnet ist, daß sie, vermischt mit dem Cellulosehydrat, mindestens ein Vinylpyrrolidon-Copolymer mit Comonomer-Einheiten aus Vinylalkanoat, Vinil-alkyl-ether, konjugiertem Alkadien, Acrylamid und/oder α,β-ethylenisch ungesättigter Carbonsäure enthält.

Das Gewichtsverhältnis von Vinylpyrrolidonhomo- und/oder -copolymer zu Cellulose beträgt allgemein 1 : 25 bis 10 : 1, bevorzugt 1 : 5 bis 5 : 1, besonders bevorzugt 1 : 4 bis 4 : 1. Der Anteil wird vorzugsweise so gewählt, daß die Hülle resistent oder zumindest weniger anfällig gegen Cellulase ist. Cellulase wird beispielsweise von Schimmelpilzen und anderen Mikroorganismen gebildet.

Die Comonomer-Einheiten in den Vinylpyrrolidon-Copolymeren sind Einheiten aus Vinylester (wie Vinylacetat) und Vinylalkylether (wie Vinyl-methyl-ether oder Vinyl-ethyl-ether), daneben auch Einheiten aus konjugierten Alkadienen (wie Butadien oder Isopren), aus Acrylamid oder aus α,β-ethylenisch ungesättigten Carbonsäuren (wie Acrylsäure, Methacrylsäure oder Itaconsäure). Die Copolymere können neben den Vinylpyrrolidon-Einheiten auch zwei oder mehr verschiedene Comonomer-Einheiten enthalten. Der Anteil der Comonomer-Einheiten hängt insbesondere davon ab, ob diese mehr polare oder apolare Eigenschaften haben. Allgemein beträgt er weniger als 50 mol-%, bevorzugt weniger als 30 mol-%.

In einer besonderen Ausführungsform enthält die Nahrungsmittelhülle eine Faserverstärkung, insbesondere eine Verstärkung aus Hanffaserpapier. Die zu einem Schlauch geformte Faserverstärkung wird von innen, von außen oder von beiden Seiten mit der Mischung aus Viskose und Vinylpyrrolidoncopolymeren beaufschlagt. Die erfindungsgemäße faserverstärkte Hülle ist demgemäß eine außen-, innen- oder doppelviskosierte Hülle. Bei der doppelviskosierten Hülle enthält vorzugsweise nur die äußere Cellulosehydrat-Schicht PVP.

Die Vinylpyrrolidon-Copolymere sind allgemein nicht vernetzt. Als vorteilhaft haben sich Typen erwiesen, die bei gleichem Feststoffgehalt wie die Viskose (etwa 7 Gew.-%) eine vergleichbare Viskosität der wäßrigen Lösung erreichen und ohne Probleme pump- und mischbar sind. Die Lösung wird kurz vor der Spinndüse in die Viskose eindosiert und gleichmäßig gemischt.

Beim Spinnprozeß fällt das PVP zusammen mit der Cellulose aus. Mit steigendem Anteil an PVP beschleunigt sich die Regeneration des verbleibenden Cellulosexanthogenats, die Gasbildung wird also entsprechend beschleunigt und kann bei unveränderter Badzusammensetzung nur durch eine Geschwindigkeitserhöhung kompensiert werden. Nach der Geschwindigkeits- oder Badkorrektur laufen diese Schläuche wesentlich stabiler und gleichmäßiger als solche ohne PVP-Zusatz.

Die Regeneration des verbleibenden Cellulosexanthogenats ist durch die bessere Zugänglichkeit wesentlich schneller abgeschlossen, d. h. es bildet sich keine dichte Membran an der Außen- bzw. Innenseite der Schlauchhülle. Die Gasbildung in den Fällkufen 1 bis 6 ist dadurch wesentlich geringer. Die Schneidezeit verlängert sich dadurch deutlich. Die verminderte Wechselwirkung zwischen den Molekülen hat ferner einen geringeren Schrumpf zur Folge, wodurch die Spannungsverhältnisse beim Transport der flachgelegten Schläuche wesentlich günstiger sind.

Der Ersatz des Cellulosehydrats durch PVP führt nicht nur zu einem besseren Lauf der Hülle auch bei höherer Geschwindigkeit, sondern er hat den entscheidenden Vorteil, daß die unangenehmen gasförmigen und gelösten Nebenprodukte des Cellulosexanthogenats entsprechend reduziert werden. Außerdem verleiht das PVP den Wursthüllen eine ganze Reihe ungewöhnlicher Eigenschaften, die bisher nicht zu erreichen waren, wie niedrigere Permeation bei unveränderter Wasserdampfdurchlässigkeit, verminderte Cellulaseanfälligkeit durch verminderten Celluloseanteil und indirekt durch Schimmelresistenz, die mit steigender Dosiermenge zur völligen Schimmelunterdrückung bei beimpften Würsten führt. Das PVP verleiht den Wursthüllen außerdem eine Affinität zum Brät.

Je höher der PVP-Anteil gewählt wird, umso weniger Fäll- und Waschkapazität ist beim Spinnprozeß erforderlich, d. h. die Zahl der Kufen kann vermindert werden, was sich ebenfalls günstig auf den Herstellungsprozeß auswirkt.

Am Ende des Spinnprozesses durchlaufen die flachgelegten Schläuche eine Weichmacherkufe, die ebenfalls teilweise oder vollständig genutzt werden kann, d. h. die Schläuche nehmen den üblichen (20 bis 22 Gew.-%) oder einen verminderten (weniger als 20 Gew.-%) Anteil an Glycerin auf.

Die erfindungsgemäße Nahrungsmittelhülle kann auch nach einem anderen Verfahren, insbesondere nach dem NMMO-Verfahren hergestellt werden. Denn Vinylpyrrolidon-(Co-)polymere (insbesondere die mit einem nicht zu hohen Molekulargewicht) sind, wie auch Cellulose, in N-Methyl-morpholin-N-oxid(NMMO) /Wasser-Gemischen (insbesondere in NMMO-Monohydrat) löslich. Das NMMO/Wasser-Gemisch mit den darin gelösten Bestandteilen wird allgemein durch eine Ringdüse in ein Fällbad extrudiert, wo die Cellulose und die Vinylpyrrolidon-Polymere regeneriert werden. Die dabei gebildete schlauchförmige Hülle wird dann in der dem Fachmann geläufigen Weise gewaschen und getrocknet, gegebenenfalls auch mit einem sekundären Weichmacher behandelt.

Interessant ist, daß die Permeation auch bei vollem Glyceringehalt, üblichem Gewicht und normaler Dicke proportional mit der PVP-Menge sinkt, beispielsweise von 100 l/m² d bei 40 bar bei 0% PVP auf 64 l/m² d bei 35% PVP. Durch die verminderte Permeation sind die erfindungsgemäßen Hüllen besonders für die Dauerwurstreifung geeignet. Für schimmelgereifte Würste sind sie dagegen völlig ungeeignet, denn es hat sich als weitere Besonderheit herausgestellt, daß bei einem Gehalt von mehr als etwa 10 Gew.-%, bezogen auf das Trockengewicht der Hülle, auch nach Beimpfung mit Edelschimmelkulturen der Schimmel nur punktförmig und vereinzelt wächst. Bei PVP-Gehalten von 20 Gew.-% und mehr bleibt der Bewuchs ganz aus.

Bisher war es nicht bekannt, daß PVP kein Schimmelwachstum zuläßt, d. h. es wird so ein indirekter Cellulaseschutz erreicht. Eine nachträgliche PVP-Beschichtung auf der Oberfläche einer PVP-freien Cellulosehydrat-Hülle hat demgegenüber überraschenderweise nur eine sehrgeringe Wirkung. Ungewöhnlich ist außerdem, daß mit steigendem PVP-Anteil die Permeation sinkt, aber die Wasserdampfdurchlässigkeit unverändert bleibt (1.500 bis 2.000 g/m²d). Die Dauerwurstreifung wird dadurch in der ersten, entscheidenden Phase gedämpft, wodurch Trockenränderverhindertwerden; danach findet eine rasche Feuchteabgabe statt.

Die eiweißähnlichen Eigenschaften des PVP verleihen den Hüllen schon ab einem Anteil von 10 Gew.-% eine deutliche Affinität zum Brät und liefern eine Schälbarkeit von 1,5 (Notenskala von 1 bis 6: 1 = sehr gut abschälbar; 6 = nicht mehr zerstörungsfrei abschälbar). Durch die übliche Eiweißimprägnierung steigt die Schälbarkeit bei außenviskosierten Hüllen auf 2 bis 2,5 an. Gegebenenfalls ist die erfindungsgemäße Hülle auf der Innenseite mit einer der üblichen Haftimprägnierungen versehen.

Durch Imprägnieren der inneren und/oder äußeren Oberfläche mit einer PVPhaltigen wäßrigen Lösung lassen sich die Eigenschaften der erfindungsgemäßen Hülle noch modifizieren. So gleiten beispielsweise Kochschinken in einer Hülle mit einer PVP-Imprägnierung auf der Außenseite auch in gefrorenem Zustand leicht aneinander vorbei. Die Produkte lassen sich damit leichter handhaben. Bei Dauerwurst führt eine PVP-Imprägnierung auf der Außenseite zu einer weiteren Steigerung der Cellulase-Resistenz.

Die erfindungsgemäße Nahrungsmittelhülle eignet sich insbesondere als künstliche Wursthülle. Jeweils 5 bis 100 m, bevorzugt 25 bis 40 m, der Hülle werden dann zu sogenannten Raupen gerafft, die anschließend auf einer automatischen Füllmaschine mit Wurstbrät gefüllt werden. Ebenso gut kann die künstliche Wursthülle zu Abschnitten mit einer Länge von allgemein 10 und 150 cm, zu einseitig abgebundenen Abschnitten (Länge ebenfalls etwa 10 bis 150 cm) oder sogenannten Bunden (Länge mehr als 1,5 m bis 30 m) konfektioniert sein.

Die nachfolgenden Beispiele dienen zur Illustration der Erfindung. Prozente sind darin Gewichtsprozente, soweit nicht anders angegeben oder aus dem Zusammenhang ersichtlich.

### Beispiel 1 (Vergleich)

Ein 19g-Hanffaserpapier wurde zu einem Schlauch mit einem Durchmesser von 60 mm (= Kaliber 60) geformt und von außen mit Viskose sowie mit Mischungen von Viskose mit einer 7%igen wäßrigen PVP-K90-Lösung beschichtet. Die Mischungen wurden so hergestellt, daß der Gesamtfeststoffgehalt unverändert blieb, d. h. die Viskose wurde um den PVP-Anteil reduziert. Die Schläuche enthielten 10%, 20%, 30%, 40% und 50% PVP.

Bei längerer Produktion konnte die Spinngeschwindigkeit erhöht werden bis die gebildete Menge an Reaktionsgas und Reaktionswasser im Schlauchinneren pro Zeiteinheit dem dann bestehenden Celluloseanteil in der Viskose entsprach.

Die Schläuche durchliefen die üblichen Bäder und wurden in der letzten Kufe mit Glycerin versetzt, so daß der Glycerinanteil in der fertigen Hülle 20 bis 22 % betrug.

Vor dem Trocknereinlauf wurde eine übliche Haftimprägnierlösung eingefüllt. Die Schläuche wurden in aufgeblasenem Zustand getrocknet, aufgewickelt und wie üblich zu Abschnitten, Abbindungen und gerafften Raupen konfektioniert. Die wichtigsten Eigenschaften sind in folgender Tabelle zusammengestellt:

| Polyvinylpyrrolidon (PVP) | m² Gew. | Glycerin | Permeation | Quellwert | Wasserdampfdurchlässigkeit | Platzdruck | stat. Dehnung |
|---|---|---|---|---|---|---|---|
| % | g | % | l/m²d bei 40 bar | % | g/m²d | kPa | mm bei 21 kPa |
| Sollwerte | | 22 | | | | 80 | 63,3-66,3 |
| 0% (Vergleich) | 74,4 | 20 | 100 | 122 | 1511 | 90 | 65,4 |
| 10 % | 74,2 | 10 | 91 | 115 | 1814 | 81 | 65,9 |
| 20 % | 73,7 | 10 | 82 | 114 | 1856 | 76 | 66,2 |
| 30 % | 75,3 | 10 | 64 | 118 | 1822 | 72 | 66,1 |
| 40 % | 73,9 | 0 | 54 | 106 | 1870 | 70 | 65,8 |
| 50 % | 74,3 | 0 | 46 | 104 | 1878 | 68 | 66 |

Füllprozeß, Reifen und Räuchern von Dauerwurst verliefen normal; die Schälbarkeit nach zweiwöchigem Reifen wurde mit der Note 2 beurteilt.

### Beispiel 2 (Vergleich)

Ein 19g-Hanffaserpapier wurde zu einem Schlauch vom Kaliber 60 geformt und außen und innen mit einer Mischung von 90 % Viskose und 10 % einer 7 %igen PVP-K90-Lösung in Wasser beschichtet. Die Verteilung auf außen und innen wurde so eingestellt, daß sich 40 % außen und 60 % innen befanden.

Der Schlauch durchlief die üblichen Bäder, aber nur zwei (statt 6) Umlenkwalzen in der Weichmacher-Kufe, so daß der fertige Schlauch nur 15 statt 22 % Glycerin enthielt. Der Schlauch wurde vor dem Trocknereinlauf mit einer üblichen Haftimprägnierlösung versehen und im aufgeblasenen Zustand getrocknet, aufgewickelt und konfektioniert.

Die mechanischen Eigenschaften entsprachen der üblichen Spezifikation; die Permeation lag bei 62 l/m² d bei 40 bar.

Füllprozeß und Reifeverlauf mit Dauerwurst waren normal; nach zweiwöchiger Reifedauer wurde die Schälbarkeit mit 2,5 beurteilt.

### Beispiel 3 (Vergleich)

Ein 19g-Hanffaserpapier wurde zu einem Schlauch vom Kaliber 49 geformt und von außen mit einer Mischung aus 70 % Viskose und 30 % einer 7 %igen wäßrigen PVP-K90-Lösung beschichtet. Der Schlauch durchlief die üblichen Bäder der Spinnmaschine, auf das Weichmachen mit Glycerin wurde allerdings verzichtet.

Es wurde eine übliche Haftimprägnierung aufgebracht, im aufgeblasenen Zustand getrocknet, aufgewickelt und konfektioniert. Die fertige Hülle wies einen Platzdruck von 105 kPa (Sollwert: 101 kPa) und eine statische Dehnung von 51,8 mm bei 42 kPa auf (Spezifikation: 51,0 bis 53,0 mm bei 42 kPa). Der Quellwert lag bei 105% und die Permeation bei 38 l/m²d bei 40 bar. Das ist die Voraussetzung für eine sehr schonende Dauerwurstreifung ohne die Ausbildung eines Trockenrandes auch unter ungünstigeren Reifebedingungen.

Nach zweiwöchiger Reifedauer wurde die Schälbarkeit mit 2,25 beurteilt.

### Beispiel 4 (Vergleich)

Ein Cellulose-PVP-Schlauch vom Kaliber 40 (ohne Faservlieseinlage) wurde hergestellt, indem eine Lösung aus 90% Viskose und 10% einer 7%igen wäßrigen PVP-K90-Lösung durch eine Ringschlitzdüse in ein Säurebad extrudiert wurde. Der Schlauch durchlief die üblichen Bäder, wurde nachfolgend mit einem Weichmacher behandelt und in aufgeblasenem Zustand getrocknet. Der Platzdruck lag bei 30 kPa, die statische Dehnung bei 15 kPa betrug 44 mm.

### Beispiel 5 (Vergleich)

Ein 19 g - Hanffaserpapier wurde zu einem Schlauch geformt. Die Innenseite des Schlauches wurde mit konventioneller Viskose beaufschlagt, die Außenseite dagegen mit einer Mischung aus 90 % Viskose und 10 % einer 7 %igen wäßrigen PVP-K90-Lösung. Die mengenmäßige Verteilung zwischen Innen- und Außenimprägnierung betrug 20:80 (bezogen auf das Gewicht der regenerierten Cellulose bzw. der Mischung aus regenerierter Cellulose und PVP).

Die schlauchförmige Hülle wurde wie in den vorangehenden Beispielen beschrieben regeneriert, gewaschen, mit Weichmacher imprägniert und getrocknet. Sie hatte anschließend ein Trockengewicht von 74,1 g/m². Die Permeation lag bei 86 l/m² d bei 40 bar.

Die Hülle ließ sich problemlos mit Dauerwurstbrät füllen. Nach zweiwöchiger Reifung wurde die Schälbarkeit mit 2,5 beurteilt.

### Beispiel 6 (Vergleich)

Beispiel 5 wurde wiederholt mit der einzigen Abweichung, daß der Anteil an PVP in der Außenviskose auf 20 % erhöht war.

Sie hatte anschließend ein Trockengewicht von 74,1 g/m². Die Permeation lag bei 75 l/m² d bei 40 bar.

Die mit dieser Hülle hergestellte Dauerwurst zeigte eine ausgeprägte Schimmelresistenz. Nach dem Beimpfen der Oberfläche mit Edelschimmelsporen war der Schimmelbewuchs deutlich vermindert und verzögert gegenüber der Hülle aus dem Beispiel 5. Für eine schimmelgereifte Dauerwurst war diese Hülle daher nicht geeignet.

### Beispiel 7 (Vergleich)

Ein 23,7 g - Hanffaserpapier wurde zu einem Schlauch mit einem Durchmesser von 100 mm (Kaliber 100) geformt und außen mit Viskose beschichtet. Der Schlauch durchlief flachgelegt die üblichen Spinn-, Fäll-, Wasch-, Entschwefelungs- und Weichmacherkufen. Danach wurde er über ein Walzenantragswerk gefahren und mit einer wäßrigen Lösung beschichtet, die 3 % PVP-K90 und 2 % Glyoxal (bezogen auf PVP) enthielt. Als Innenpräparation wurde vor dem Trocknereinlauf eine Trennpräparation aus 0,33 % ®Montacell CF, 3 % Siliconöl-Emulsion E2 und 2 % Wachsdispersion (40%ig bezogen auf PVP) eingefüllt.

In 1,80 m lange, einseitig abgebundene Hüllen wurde Kochschinken eingefüllt. Die tiefgefrorenen Würste ließen sich leicht übereinander ziehen. Die Hüllen waren sehr gut schälbar.

### Beispiel 8 (Vergleich)

Ein 19 g - Hanffaserpapier wurde zu einem Schlauch vom Kaliber 60 geformt, außen mit Viskose beschichtet und wie üblich regeneriert, gewaschen und weich gemacht. Der Gelschlauch wurde über ein Walzenantragswerk gefahren und mit einerwäßrigen Lösung präpariert, die 3 % PVP-K90 und 3 % Glyoxal (bezogen auf PVP) und 2 % Wachs enthielt. Als Innenpräparation wurde vor dem Trocknereinlauf eine wäßrige Lösung aus 1.5 % Casein, 3 % Glyoxal (bezogen auf Casein) und 6 % ®Aquapel (7,6%ig) eingefüllt.

Die Schläuche wurden zu Raupen gerafft und mit Dauerwurstbrät gefüllt. Unter ungünstigen Reifebedingungen, d.h. bei Bildung cellulytischer Enzyme, war kein Celluloseabbau und damit keine Festigkeitsverminderung der Hüllen festzustellen. Sie ließen sich leicht und ohne abzureißen von der Wurst abschälen.

Die Hülle ließ sich problemlos mit Dauerwurstbrät füllen. Nach zweiwöchiger Reifung wurde die Schälbarkeit mit 2,5 beurteilt.

## Patentansprüche

1. Cellulosehydrat enthaltende, nahtlose, schlauchförmige Nahrungsmittelhülle, **dadurch gekennzeichnet, daß** sie, vermischt mit dem Cellulosehydrat, mindestens ein Vinylpyrrolidon -Copolymer mit Comonomer-Einheiten aus Vinylalkanoat, Vinyl-alkyl-ether, konjugiertem Alkadien, Acrylamid und/oder α,β-ethylenisch ungesättigter Carbonsäure enthält.

2. Nahrungsmittelhülle gemäß Anspruch 1, **dadurch gekennzeichnet, daß** das Gewichtsverhältnis von Vinylpyrrolidon -Copolymer zu Cellulose 1 : 25 bis 10 : 1, bevorzugt 1 : 5 bis 5 : 1, besonders bevorzugt 1 : 4 bis 4 : 1, beträgt.

3. Nahrungsmittelhülle gemäß Anspruch 1, **dadurch gekennzeichnet, daß** der Anteil der Comonomer-Einheiten weniger als 50 mol-%, bevorzugt weniger als 30 mol-%, beträgt.

4. Nahrungsmittelhülle gemäß einem oder mehreren der Ansprüche 1 bis 3, **dadurch gekennzeichnet, daß** sie eine Faserverstärkung, insbesondere eine Verstärkung aus einem Hanffaserpapier, enthält.

5. Nahrungsmittelhülle gemäß Anspruch 4, **dadurch gekennzeichnet, daß** die Faserverstärkung auf beiden Seiten eine Cellulosehydrat enthaltende Schicht aufweist, wobei in beiden Schichten oder nur in der Schicht auf der Außenseite mindestens ein Vinylpyrrolidon -Copolymer enthalten ist.

6. Nahrungsmittelhülle gemäß Anspruch 5, **dadurch gekennzeichnet, daß** nur die Cellulosehydrat-Schicht auf der Außenseite der Faserverstärkung Vinylpyrrolidon -Copolymer enthält.

7. Nahrungsmittelhülle gemäß einem oder mehreren der Ansprüche 1 bis 6, **dadurch gekennzeichnet, daß** der Anteil an Vinylpyrrolidon-Copolymer ausreicht, um ein Schimmelwachstum zu hemmen oder zu unterdrücken.

8. Nahrungsmittelhülle gemäß einem oder mehreren der Ansprüche 1 bis 7, **dadurch gekennzeichnet, daß** jeweils 5 bis 100 m, bevorzugt 25 bis 40 m, davon zu einer Raupe gerafft sind.

9. Verfahren zur Herstellung einer Nahrungsmittelhülle gemäß einem oder mehreren der Ansprüche 1 bis 7, **dadurch gekennzeichnet, daß** ein Faserpapier zu einem Schlauch geformt, außen oder innen oder beidseitig mit einer Mischung aus Viskose und einer wäßrigen Lösung eines Vinylpyrrolidon -Copolymers beaufschlagt, die Mischung gefällt und regeneriert, die Hülle anschließend gewaschen, weichgemacht und getrocknet wird.

10. Verwendung der Nahrungsmittelhülle gemäß einem oder mehreren der Ansprüche 1 bis 7 als künstliche Wursthülle, bevorzugt für Dauerwurst.

## Claims

1. A cellulose-hydrate-containing seamless tubular food casing, which contains in admixture with the cellulose hydrate at least one vinylpyrrolidone copolymer having comonomer units of vinyl alkanoate, vinyl alkyl ether, conjugated alkadiene, acrylamide and/or α,β-ethylenically unsaturated carboxylic acid.

2. The food casing as claimed in claim 1, wherein the weight ratio of vinylpyrrolidone copolymer to cellulose is from 1:25 to 10:1, preferably from 1:5 to 5:1, particularly preferably from 1:4 to 4:1.

3. The food casing as claimed in claim 1, wherein the proportion of the comonomer units is less than 50 mol%, preferably less than 30 mol%.

4. The food casing as claimed in one or more of claims 1 to 3, wherein it comprises a fiber reinforcement, in particular a reinforcement of a hemp fiber paper.

5. The food casing as claimed in claim 4, wherein the fiber reinforcement has, on both sides, a cellulose-hydrate-containing layer, at least one vinylpyrrolidone copolymer being present in both layers or only in the layer on the outside.

6. The food casing as claimed in claim 5, wherein only the cellulose hydrate layer on the outside of the fiber reinforcement contains vinylpyrrolidone copolymer.

7. The food casing as claimed in one or more of claims 1 to 6, wherein the content of vinylpyrrolidone copolymer is sufficient to inhibit or suppress mold growth.

8. The food casing as claimed in one or more of claims 1 to 7, wherein, in each case, from 5 to 100 m, preferably from 25 to 40 m, thereof are shirred to form a shirred stick.

9. A process for producing a food casing as claimed in one or more of claims 1 to 7, which comprises shaping a fiber paper to form a tube, charging it externally or internally or on both sides with a mixture of viscose and an aqueous solution of a vinylpyrrolidone copolymer, precipitating and regenerating the mixture, and subsequently washing, plasticizing and drying the casing.

10. The use of the food casing as claimed in one or more of claims 1 to 7 as artificial sausage casing, preferably for dry or semi-dry sausage.

## Revendications

1. Enveloppe alimentaire tubulaire sans couture à teneur en hydrate de cellulose, **caractérisée en ce qu'**elle contient, mélangé à l'hydrate de cellulose, au moins un copolymère de vinylpyrrolidone comportant des unités des comonomères vinylalcanoate, vinyl-alkyl-éther, alcadiène conjugué, acrylamide et/ou acide carboxylique à insaturation α,β-éthylénique.

2. Enveloppe alimentaire selon la revendication 1, **caractérisée en ce que** le ratio pondéral entre le copolymère vinylpyrrolidone et la cellulose est de 1:25 jusqu'à 10:1, de préférence 1:5 jusqu'à 5:1, et en particulier 1:4 jusqu'à 4:1.

3. Enveloppe alimentaire selon la revendication 1, **caractérisée en ce que** la teneur en unités comonomères est inférieure à 50% en moles, de préférence inférieure à 30% en moles.

4. Enveloppe alimentaire selon l'une quelconque des revendications 1 à 3, **caractérisée en ce qu'**elle comporte un renforcement à base de fibres, en particulier un renforcement à base de papier de fibres de chanvre.

5. Enveloppe alimentaire selon la revendication 4, **caractérisée en ce que** le renforcement à base de fibres comporte sur les deux faces une couche contenant de l'hydrate de cellulose, les deux couches ou seulement la couche extérieure pouvant contenir un copolymère vinylpyrrolidone.

6. Enveloppe alimentaire selon la revendication 5, **caractérisée en ce que** seulement la couche d'hydrate de cellulose sur la face extérieure du renforcement à base de fibres contient un copolymère vinylpyrrolidone.

7. Enveloppe alimentaire selon l'une quelconque des revendications 1 à 6, **caractérisée en ce que** la teneur en copolymère vinylpyrrolidone est suffisante pour inhiber ou supprimer la croissance de moisissures.

8. Enveloppe alimentaire selon l'une quelconque des revendications 1 à 7, **caractérisée en ce que** 5 à 100 m, de préférence 25 à 40 m, de ladite enveloppe sont rassemblés en une chenille respectivement.

9. Procédé de préparation d'une enveloppe alimentaire selon l'une quelconque des revendications 1 à 7, **caractérisé en ce que** l'on forme un papier de fibres en un tube, que l'on enduit la face extérieure ou la face intérieure ou les deux faces avec un mélange de viscose et d'une solution aqueuse d'un copolymère vinylpyrrolidone, que l'on précipite et régénère le mélange, et **en ce que** l'enveloppe est ensuite lavée, plastifiée et séchée.

10. Utilisation de l'enveloppe alimentaire selon l'une quelconque des revendications 1 à 7 à titre d'enveloppe synthétique pour saucisses, de préférence de saucissons.
